# FASCICULE DE BREVET EUROPEEN

(11) **EP 4 347 359 B1**
(45) Date de publication et mention de la délivrance du brevet: **05.03.2025**
(21) Numéro de dépôt: 22721809.6
(22) Date de dépôt: 07.04.2022
(51) Int. Cl.: B62D 21/15, B62D 25/02

(54) **VÉHICULE AUTOMOBILE PRÉSENTANT UN LONGERON EXTÉRIEUR À DÉFORMATION PROGRAMMÉE**
KRAFTFAHRZEUG MIT EINEM ÄUSSEREN LÄNGSTRÄGER MIT PROGRAMMIERTEM KNICK
MOTOR VEHICLE HAVING AN OUTER SIDE-MEMBER WITH PROGRAMMED BUCKLING

(30) Priorité: 26.05.2021 FR 2105465
(43) Date de publication de la demande: 10.04.2024
(73) Titulaire: Stellantis Auto SAS, 78300 Poissy (FR)
(72) Inventeur: BENANE, Said, 94240 L HAY LES ROSES (FR)
(74) Mandataire: BCIP
(86) Numéro de dépôt international: PCT/FR2022/050645
(87) Numéro de publication internationale: WO 2022/248785

(56) Documents cités:
- EP-A2- 1 241 079
- CN-A- 106 347 469
- JP-A- 2016 043 765

## Description

La présente invention revendique la priorité de la demande française 2105465 déposée le 26 Mai 2021.

Le domaine technique concerne les véhicules automobiles comportant un longeron extérieur à déformation programmée.

En matière de sécurité routière, les constructeurs d'automobiles doivent prendre en compte de multiples préoccupations et réglementations lors du développement de nouveaux véhicules afin, d'une part, d'assurer la sécurité des passagers du véhicule en cas de collision ou encore celle des autres usagers de la route les plus vulnérables tels que les piétons et, d'autre part, de maitriser les coûts de réparations des véhicules lorsqu'ils subissent des chocs urbains, dénommés chocs réparabilité. Les chocs réparabilité sont des chocs subis à de faibles vitesses de l'ordre de 15 à 20 kilomètres par heure. Lors d'un choc réparabilité seuls certains éléments du véhicule subissent généralement une déformation et/ou une rupture étudiées pour minimiser les dégâts et les coûts de réparation. Pour des chocs à des vitesses supérieures, de l'ordre de 50 km/h ou plus, les véhicules sont amenés à se déformer pour absorber une partie au moins de l'énergie libérée lors du choc, afin de protéger au mieux les passagers. Le comportement à la déformation d'un véhicule automobile, sous l'effet d'un choc, est particulièrement maitrisé par les constructeurs d'automobiles qui cherchent absolument à éviter certaines situations dangereuses pour les occupants de leurs véhicules et à optimiser l'absorption d'énergie d'un choc.

Le document EP1241079 décrit par exemple un véhicule comprenant un longeron extérieur de caisse s'étendant entre une extrémité avant et une extrémité arrière en regard d'un passage de roue, présentant une âme centrale se prolongeant par une patte de fixation de façon à former l'extrémité arrière du longeron.

Les différents chocs que peut subir un véhicule sont simulés grâce à des procédures normalisées telles que, par exemple, celles décrites par l'organisme international Euro NCAP.

Outre le comportement d'un nouveau véhicule lors des différents chocs, d'autres contraintes doivent être prises en compte : ainsi, lors du développement d'un véhicule sportif, les constructeurs d'automobiles cherchent à réduire au maximum la masse de ce dernier, ce qui peut s'avérer préjudiciable à son comportement en cas de déformation suite à un choc avant.

Ainsi, il existe un besoin d'une nouvelle solution pour permettre la transmission et la répartition des efforts que subit un véhicule lors d'une déformation vers l'ensemble de sa structure.

Dans ce contexte technique, un but de la présente invention est de fournir un véhicule présentant un longeron extérieur à déformation programmée permettant d'absorber et de répartir une partie de l'énergie libérée par un choc avant.

A cet effet, la présente invention se rapporte à un véhicule automobile comprenant au moins un longeron extérieur de caisse s'étendant entre une extrémité avant et au moins une extrémité arrière, chaque extrémité arrière étant disposée en regard d'un passage de roue arrière du véhicule, le longeron présentant une âme centrale prolongée par au moins une patte de déformation s'étendant depuis l'âme centrale de façon à former une extrémité arrière du longeron, le véhicule étant conçu pour se déformer, sous l'effet d'un choc avant subi par le véhicule, de sorte qu'au moins une patte de déformation impacte le passage de roue, chaque patte de déformation étant conformée pour subir une déformation lors de l'impact sur le passage de roue arrière pour absorber une partie de l'énergie du choc.

Ainsi, le longeron du véhicule selon l'invention, grâce à son âme centrale présente une rigidité comparable à celle d'un véhicule classique à longeron extérieur classique. Les pattes de déformation permettent, en cas de choc avant sur le véhicule impliquant sa déformation, d'absorber une partie de l'énergie libérée par le choc en se déformant. Le longeron extérieur du véhicule selon l'invention présente ainsi une déformation programmée en cas de choc qui permet de d'absorber et de répartir l'énergie due au choc. Il convient ici et dans la suite de comprendre par choc avant un choc avant subi à une vitesse telle que le véhicule est susceptible de subir une déformation structurelle. Un tel choc avant est, par exemple, un choc décrit par les procédures standard pour étudier la déformation du véhicule à vitesse supérieure ou égale à 50 km/h.

Selon un mode de réalisation de l'invention, au moins un passage de roue arrière présente au moins une surface d'impact disposée en regard d'au moins une extrémité arrière du longeron et orientée de sorte à induire une déformation de la patte de déformation, lors de l'impact, vers l'extérieur du véhicule. Un tel passage de roue arrière permet de faciliter la déformation d'une patte de déformation et permet d'éviter la perforation du passage de roue arrière.

Avantageusement, le passage de roue arrière est formé par emboutissage et présente une arrête de renfort délimitant au moins en partie une surface d'impact. Selon une possibilité, l'âme centrale est formée par un profilé en forme de U, la base du U étant orientée vers l'extérieur du véhicule.

Avantageusement, les pattes de déformation sont formées par une découpe de la base du profilé en U. De préférence la découpe est en forme de V ou de U. L'invention sera mieux comprise à la lecture de la description détaillée qui va suivre, donnée uniquement à titre d'exemple non limitatif et faite en se référant au dessin annexé sur lequel :

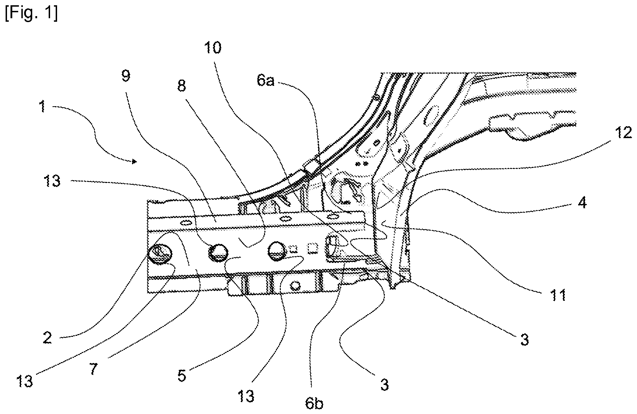

[Fig. 1] la figure 1, représente une vue en perspective et de côté d'un véhicule selon l'invention montrant l'âme centrale et les extrémités arrière d'un longeron extérieur du véhicule.

Un véhicule 1 automobile selon l'invention, dont la structure est illustrée partiellement sur la figure 1, comprend au moins un longeron 2 extérieur de caisse s'étendant entre une extrémité avant, non illustrée sur la figure, et au moins une, en l'occurrence deux extrémités arrière 3. Tel un longeron classique, l'extrémité avant du longeron 2 est, par exemple, située en regard d'un passage de roue avant. Chaque extrémité arrière 3 est disposée en regard d'un passage de roue arrière 4 du véhicule 1.

Le longeron 2 présente une âme centrale 5 qui s'étend depuis l'extrémité avant du longeron 2. L'âme centrale 5 est prolongée par au moins une, en l'occurrence deux pattes de déformation 6a, 6b qui s'étendent depuis l'âme centrale 5 de façon à former chacune une extrémité arrière 3 du longeron 2.

Dans le mode de réalisation illustré sur la figure, l'âme centrale 5 est formée par un profilé 7 présentant une forme de U selon une coupe transversale de l'âme centrale 5. Le profilé 7 en forme de U est formé par une base 8 du U et deux rebords 9 formant les bords du U. Le profilé 7 est conformé de telle sorte que la base 8 du U soit orientée vers l'extérieur du véhicule 1 et forme la face visible du longeron 2 depuis l'extérieur.

Les pattes de déformation 6a, 6b sont formées par une découpe 10, notamment une découpe en forme de U ou de V de la base 8 du U. Ainsi, chaque patte de déformation 6a, 6b est formée, d'une part, par une partie de la base 8 du U délimitée par la découpe 10 et, d'autre part, par le rebord 9 correspondant.

Le véhicule 1 est conçu pour se déformer sous l'effet d'un choc avant subi par le véhicule 1. Lors de la déformation programmée du véhicule 1, les extrémités arrière 3 situées aux extrémités des pattes de déformation 6a, 6b impactent le passage de roue arrière 4, chaque patte de déformation 6a, 6b étant conformée pour subir une déformation lors de l'impact sur le passage de roue arrière 4 pour absorber une partie de l'énergie du choc. Lors de la déformation, chaque patte de déformation 6a, 6b impacte le passage de roue arrière 4 puis glisse sur une surface d'impact 11 du passage de roue arrière 4, disposée en regard d'au moins une des extrémités arrière 3 du longeron 2. Dans l'exemple illustré sur la figure, la patte de déformation 6a située sur la partie haute du longeron 2 glisse et se déforme vers le haut tandis que la patte de déformation 6b située sur la partie basse du longeron 2 se déforme vers le bas du véhicule 1.

Afin de faciliter la déformation des pattes de déformation 6a, 6b tout en évitant la perforation du passage de roue arrière 4 par les pattes de déformation 6a, 6b, pour préserver les roues arrière du véhicule 1, la surface d'impact 11 du passage de roue arrière 4 présente une orientation privilégiée. Cette orientation privilégiée est choisie de sorte à induire une déformation de la patte de déformation 6a, 6b, lors de l'impact, vers l'extérieur du véhicule 1. Avantageusement, le passage de roue arrière 4 est formé par emboutissage et présente une arrête de renfort 12 délimitant au moins en partie la surface d'impact 11.

Afin d'alléger le véhicule 1, le longeron 2 est pourvu d'une pluralité d'orifices 13 destinés à réduire la masse du longeron 2.

Ainsi, le véhicule 1 présente un longeron 2 extérieur à déformation programmée permettant d'absorber et de répartir une partie de l'énergie libérée par un choc avant sur une partie arrière du véhicule 1 par déformation des pattes de déformation 6a, 6b.

L'invention ne se limite pas au mode de réalisation du véhicule décrit ci-avant, seulement à titre d'exemple, mais d'autres modes de réalisation peuvent être conçus par l'homme de métier sans sortir du cadre et de la portée de la présente invention.

## Revendications

1. Véhicule (1) automobile comprenant au moins un longeron (2) extérieur de caisse s'étendant entre une extrémité avant et au moins une extrémité arrière (3), chaque extrémité arrière (3) étant disposée en regard d'un passage de roue arrière (4) du véhicule (1), le longeron (2) présentant une âme centrale (5) prolongée par au moins une patte de déformation (6a, 6b) s'étendant depuis l'âme centrale (5) de façon à former une extrémité arrière (3) du longeron (2), le véhicule (1) étant conçu pour se déformer, sous l'effet d'un choc avant subi par le véhicule (1), de sorte qu'au moins une patte de déformation (6a, 6b) impacte le passage de roue (4), chaque patte de déformation (6a, 6b) étant conformée pour subir une déformation lors de l'impact sur le passage de roue arrière (4) pour absorber une partie de l'énergie du choc.

2. Véhicule (1) selon la revendication 1, **caractérisé en ce que** au moins un passage de roue arrière (4) présente au moins une surface d'impact (11) disposée en regard d'au moins une extrémité arrière (3) du longeron et orientée de sorte à induire une déformation de la patte de déformation (6a, 6b), lors de l'impact, vers l'extérieur du véhicule (1).

3. Véhicule (1) selon la revendication 2, **caractérisé en ce que** le passage de roue arrière (4) est formé par emboutissage et présente une arrête de renfort (12) délimitant au moins en partie une surface d'impact (11).

4. Véhicule (1) selon l'une des revendications 1 à 3, **caractérisé en ce que** l'âme centrale (5) est formée par un profilé (7) en forme de U, la base (8) du U étant orientée vers l'extérieur du véhicule (1).

5. Véhicule (1) selon la revendication 4, **caractérisé en ce que** les pattes de déformation (6a, 6b) sont formées par une découpe (10) de la base (8) du profilé (7) en U.

## Patentansprüche

1. Kraftfahrzeug (1) mit mindestens einem zwischen einem vorderen und mindestens einem hinteren Ende (3) verlaufenden äußeren Karosserieholm (2), wobei jedes hintere Ende (3) ei nem hinteren Raddurchgang (4) des Fahrzeugs (1) gegenüberliegend angeordnet ist, wobei d er Holm (2) einen mittleren Kern (5) aufweist, der durch mindestens eine vom mittleren Kern (1) sich erstreckende Verformungslasche (6a, 6b) verlängert ist 5) so ausgebildet ist, dass ein hinteres Ende (3) des Längsträgers (2) gebildet wird, wobei das Fahrzeug (1) so ausgebildet i st, dass es sich unter Einwirkung eines vorderen Aufpralls des Fahrzeugs (1) verformt, sodass mindestens eine Verformungslasche (6a, 6b) den Raddurchlass (4) überlagert, wobei jede Ve rformungslasche (6a, 6b) so ausgebildet ist, dass sie beim Aufprall verformt wird der Hinterra ddurchgang (4) zur Absorption eines Teils der Stoßenergie.

2. Fahrzeug (1) nach Anspruch 1, **dadurch gekennzeichnet, dass** mindestens ein Hinterraddur chgang (4) mindestens eine Aufprallfläche (11) aufweist, die gegenüber mindestens einem hi nteren Ende (3) des Längsträgers angeordnet ist und so ausgerichtet ist, dass beim Aufprall e ine Verformung der Verformungslasche (6a, 6b) nach außerhalb des Fahrzeugs (1) bewirkt wird.

3. Fahrzeug (1) nach Anspruch 2, **dadurch gekennzeichnet, dass** der Hinterraddurchgang (4) durch Tiefziehen gebildet ist und eine Verstärkungsfahne (12) aufweist, die zumindest teilweise eine Aufprallfläche (11) begrenzt.

4. Fahrzeug (1) nach einem der Ansprüche 1 bis 3, **dadurch gekennzeichnet, dass** der Mittelkern (5) durch ein U-förmiges Profil (7) gebildet ist, wobei die U-Basis (8) dem Fahrzeug (1) zugewandt ist.

5. Fahrzeug (1) nach Anspruch 4, **dadurch gekennzeichnet, dass** die Verformungslaschen (6a, 6b) durch einen Ausschnitt (10) der Basis (8) des U-förmigen Profils (7) gebildet sind.

## Claims

1. Motor vehicle (1) comprising at least one (2) outer body length extending between a front end and at least one rear end (3), each rear end (3) being positioned next to a rear wheel passage (4) of the vehicle (1), the longitudinal (2) having a center core (5) extended by at least one deformation leg (6a, 6b) extending from the core center (5) so as to form a rear end (3) of the spar (2), the vehicle (1) being designed to deform itself, as a result of a vehicle-borne impact (1), so that at least one deformation leg (6a, 6b) impacts the wheel passage (4), each deformation leg (6a, 6b) being conformed to undergo a deformation during the wheel passage (4) impact on the rear wheel passage (4) to absorb some of the shock energy.

2. Vehicle (1) according to Claim 1, characterized that at least one rear wheel passage (4) has at least one impact surface (11) positioned next to at least one rear end (3) of the spar and oriented in such a way as to induce deformation of the deformation leg (6a, 6b), on impact, towards the outside of the vehicle (1).

3. Vehicle (1) according to Claim 2, characterized as the rear wheel passage (4) is formed by stamping and has a reinforcement stop (12) defining at least part of an impact surface (11).

4. Vehicle (1) according to one of the claims 1 to 3, characterized as the center core (5) is formed by a U-shaped profile (7), with base (8) of the U facing outwards from the vehicle (1).

5. Vehicle (1) according to Claim 4, characterized as the deformation legs (6a, 6b) are formed by a cutting (10) of the base (8) of the profile (7) in U.
